(19) Europäisches Patentamt
European Patent Office
Office européen des brevets

(11) **EP 3 333 661 B1**

(12) **EUROPEAN PATENT SPECIFICATION**

(45) Date of publication and mention
of the grant of the patent:
**31.03.2021 Bulletin 2021/13**

(21) Application number: **16833063.7**

(22) Date of filing: **03.08.2016**

(51) Int Cl.:
***G05B 23/02*** (2006.01)

(86) International application number:
**PCT/JP2016/072716**

(87) International publication number:
**WO 2017/022784 (09.02.2017 Gazette 2017/06)**

(54) **ABNORMALITY PREDICTOR DIAGNOSIS SYSTEM AND ABNORMALITY PREDICTOR DIAGNOSIS METHOD**

ANOMALIEPRÄDIKTORDIAGNOSESYSTEM UND
ANOMALIEPRÄDIKTORDIAGNOSEVERFAHREN

SYSTÈME DE DIAGNOSTIC DE PRÉDICTEUR D'ANOMALIE ET PROCÉDÉ DE DIAGNOSTIC DE
PRÉDICTEUR D'ANOMALIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.08.2015 JP 2015155489**

(43) Date of publication of application:
**13.06.2018 Bulletin 2018/24**

(73) Proprietor: **Hitachi Power Solutions Co., Ltd.
Hitachi-shi, Ibaraki 317-0073 (JP)**

(72) Inventor: **NODA, Toujirou
Hitachi-shi, Ibaraki 317-0073 (JP)**

(74) Representative: **Strehl Schübel-Hopf & Partner
Maximilianstrasse 54
80538 München (DE)**

(56) References cited:
**EP-A1- 2 442 288        EP-A1- 2 752 722
JP-A- 2005 090 864        JP-A- 2010 191 556
JP-A- 2013 107 417        JP-A- 2015 108 886
US-A1- 2012 084 030**

## Description

### TECHNICAL FIELD

The present invention relates to an abnormality predictor diagnosis system and the like that diagnose a mechanical facility for the presence of an abnormality predictor.

### BACKGROUND ART

A technique is known that diagnoses a mechanical facility for the presence of an abnormality predictor based on detection values of a sensor and the like installed in the mechanical facility.

For instance, Patent Literature 1 describes an abnormality predictor diagnosis device that divides an operation schedule of a mechanical facility into multiple time slots, learns a cluster which indicates a normal range of the mechanical facility by clustering time-series data for each time slot, and diagnoses the mechanical facility for the presence of an abnormality predictor based on the cluster.

Also, Patent Literature 2 describes a plant monitoring device that obtains image data as learning data with 15-minute intervals, the image data indicating a temperature distribution of a plant to be monitored, learns a normal pattern of a temperature change using a neural network based on the learning data, and further identifies the presence or absence of abnormality of the plant to be monitored, based on the normal pattern.

### CITATION LIST

#### Patent Literature

Patent Literature 1: Japanese Patent No. 5684941
Patent Literature 2: Japanese Unexamined Patent Application Publication No. H6-259678

### SUMMARY OF INVENTION

#### Technical Problem

With the technique described in Patent Literature 1, clusters are collectively learned in each time slot included in the multiple time slots. Therefore, for instance, in one time slot, when time-series data has a rapidly varying waveform with a size in a predetermined range, or time-series data has a gently varying waveform with a size in the predetermined range, these are not distinguished, and diagnosis of "abnormal predictor is not present" may be made.

However, particularly, in a chemical plant and a pharmaceutical plant, importance is placed on also the waveform in addition to the size of time-series data. This is because the waveform of time-series data reflects the process of a chemical reaction and a reaction rate. When one of the two types (rapidly varying, gently varying) of waveforms indicates "abnormality predictor is not present", the other type should be diagnosed as "abnormality predictor is present".
Therefore, the technique described in Patent Literature 1 has more room for improvement in diagnostic accuracy.

Also, with the technique described in Patent Literature 2, as described above, a normal pattern is learned based on the image data obtained with 15-minute intervals. However, the temperature distribution of a plant to be monitored varies every moment, and when the time-series waveform is attempted to be reflected in a normal pattern accurately, the amount of computation in a neural network becomes huge. Therefore, the technique described in Patent Literature 2 also has more room for improvement in diagnostic accuracy.

Thus, it is an object of the present invention to provide an abnormality predictor diagnosis system and the like capable of diagnosing a mechanical facility for the presence of an abnormality predictor with high accuracy.

EP 2 752 722 A1 discloses a method and a device for detection of anomaly indications in a monitored facility using normal models based on projection distance and local subspace methods.

#### Solution to Problem

In order to solve the above-mentioned problem, the present invention suggests the abnormality predictor diagnosis system defined in Claim 1. Further advantageous features are set out in the dependent claims.

#### Advantageous Effects of Invention

According to the present invention, it is possible to provide an abnormality predictor diagnosis system and the like that diagnose a mechanical facility for the presence of an abnormality predictor with high accuracy.

#### BRIEF DESCRIPTION OF DRAWINGS

FIG. 1 is a configuration diagram of an abnormality predictor diagnosis system according to an embodiment of the present invention.
FIG. 2 is a waveform diagram illustrating a change in detection values of a sensor.
FIG. 3 is a configuration diagram of a data mining means included in the abnormality predictor diagnosis system.
FIG. 4 is an explanatory diagram related to detection values of a sensor, and the line expressed by a linear function.
FIG. 5 is an explanatory diagram of a cluster learned by a cluster learning unit.

FIG. 6 is a flowchart illustrating the processing of the abnormality predictor diagnosis system.

FIG. 7 is a flowchart of learning processing executed by a learning means.

FIG. 8 is a flowchart of diagnostic processing executed by a diagnosis means.

FIG. 9A is an explanatory diagram illustrating the waveform of learning target data, and the line of a linear function, and FIG. 9B is an explanatory diagram illustrating the waveform of diagnosis target data, and the line of a linear function at the time of occurrence of an abnormality predictor of a mechanical facility.

FIG. 10 is an explanatory diagram of clusters which are results of learning, and feature vectors of diagnosis target data.

FIG. 11A is an explanatory diagram illustrating another example of the waveform of learning target data, and the line of a linear function, and FIG. 11B is an explanatory diagram illustrating the waveform of diagnosis target data, and the line of a linear function at the time of occurrence of an abnormality predictor of a mechanical facility.

FIG. 12 is an explanatory diagram of clusters which are results of learning, and feature vectors of diagnosis target data.

## DESCRIPTION OF EMBODIMENTS

<<Embodiment>>

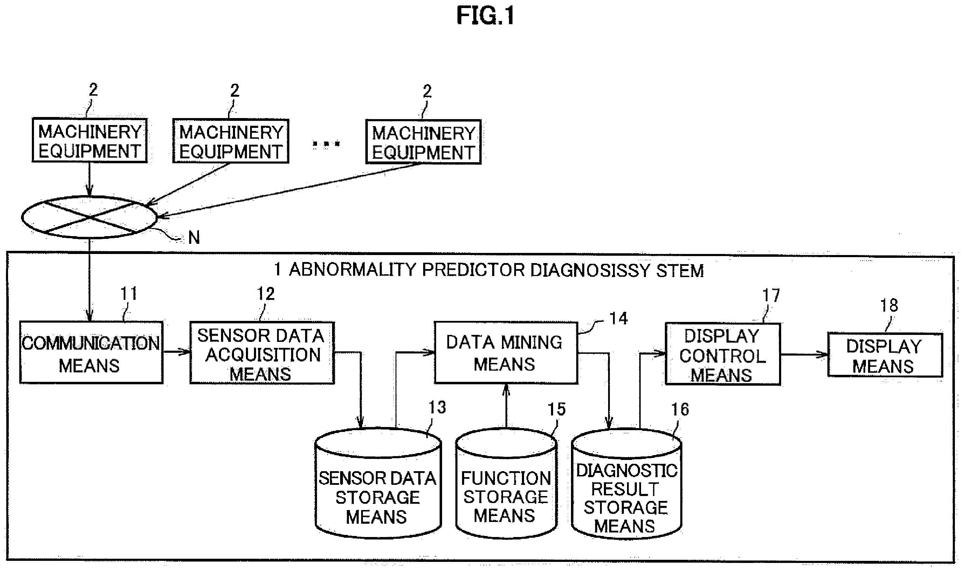

FIG. 1 is a configuration diagram of an abnormality predictor diagnosis system 1 according to this embodiment.

The abnormality predictor diagnosis system 1 is a system that diagnoses a mechanical facility 2 for the presence of an abnormality predictor based on sensor data including detection values of a sensor (not illustrated) installed in the mechanical facility 2. The above-mentioned "abnormality predictor" is a precursor to an occurrence of abnormality of the mechanical facility 2, and "abnormality predictor diagnosis" is to diagnose for the presence of an abnormality predictor.

Hereinafter the mechanical facility 2 will be briefly described before a description of the abnormality predictor diagnosis system 1 is given. The mechanical facility 2 is, for instance, a chemical plant, and includes a reactor, and a device (not illustrated) that loads chemical substances to the reactor. Then, a predetermined "operation process" is repeated in the mechanical facility 2, thus predetermined chemical substances are generated in each process. It is to be noted that the type of the mechanical facility 2 is not limited to this, and may be a pharmaceutical plant, a production line, a gas engine, a gas turbine, a power generation facility, a medical facility, or a communication facility.

In the mechanical facility 2, a sensor (not illustrated) which detects predetermined physical quantities (such as a temperature, a pressure, a flow rate, a current, a voltage) is installed. A physical quantity detected by the sensor is transmitted to the abnormality predictor diagnosis system 1 as sensor data via a network N. It is to be noted that in addition to a detection value of the sensor, and the date and time on which the physical quantity is detected, the sensor data also includes identification information of the mechanical facility 2, identification information of the sensor, and a signal indicating the start and end of an "operation process" which is repeated in the mechanical facility 2.

Hereinafter, as an example, the configuration of diagnosis of the mechanical facility 2 for the presence of an abnormality predictor based on the detection values of a sensor will be described, the sensor being one of multiple sensors installed in the mechanical facility 2 and sensitively reflecting an abnormality predictor of the mechanical facility 2.

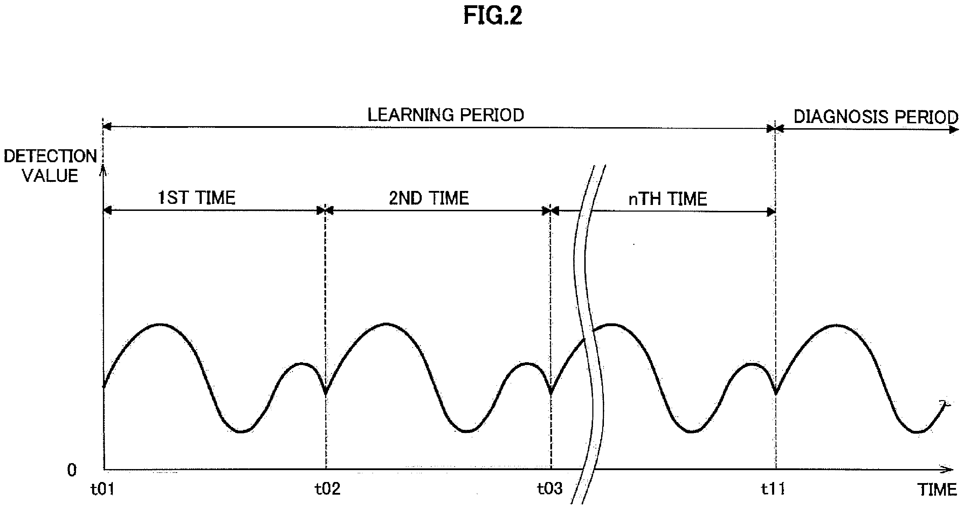

FIG. 2 is a waveform diagram illustrating a change in the detection values of the sensor. It is to be noted that the horizontal axis of FIG. 2 indicates time and the vertical axis indicates detection value of the sensor (not illustrated) installed in the mechanical facility 2.

In the example illustrated in FIG. 2, the 1st time operation process is executed in the mechanical facility 2 in the time slot from time t01 to time t02, and the 2nd time operation process is executed in the time slot from time t02 to time t03. Since a predetermined operation process is repeated in this manner, when the mechanical facility 2 is normal, the detection values of the sensor in the operation processes have a similar (that is, quite analogous) waveform.

In this embodiment, a time-series waveform (a waveform of each operation process) of sensor data is learned as a normal model based on the sensor data obtained in a predetermined learning period (see FIG. 2) in which the mechanical facility 2 is known to be normal, and the presence of an abnormality predictor of the mechanical facility 2 is determined based on the normal model. The details of the normal model will be described later.

<Configuration of Abnormality Predictor Diagnosis System>

As illustrated in FIG. 1, the abnormality predictor diagnosis system 1 includes a communication means 11, a sensor data acquisition means 12, a sensor data storage means 13, a data mining means 14, a function storage means 15, a diagnostic result storage means 16, a display control means 17, and a display means 18.

The communication means 11 receives information including sensor data from the mechanical facility 2 via a network N. For instance, a router which receives information in accordance with a communication protocol of TCP/IP can be used as the communication means 11.

The sensor data acquisition means 12 acquires the sensor data included in the information received by the communication means 11 via the network N, and stores the acquired sensor data in the sensor data storage means 13.

The sensor data storage means 13 stores the sensor data acquired by the sensor data acquisition means 12, for instance, as a database. It is to be noted that a magnetic disk device, an optical disk device, a semiconductor memory device and the like may be used as the sensor data storage means 13.

The data mining means 14 learns a normal waveform of detection values (in other words, sensor data) of the sensor as a normal model by data mining that is a statistical data classification technique, and diagnoses the mechanical facility 2 for the presence of an abnormality predictor based on the normal model. The details of the data mining means 14 will be described later.

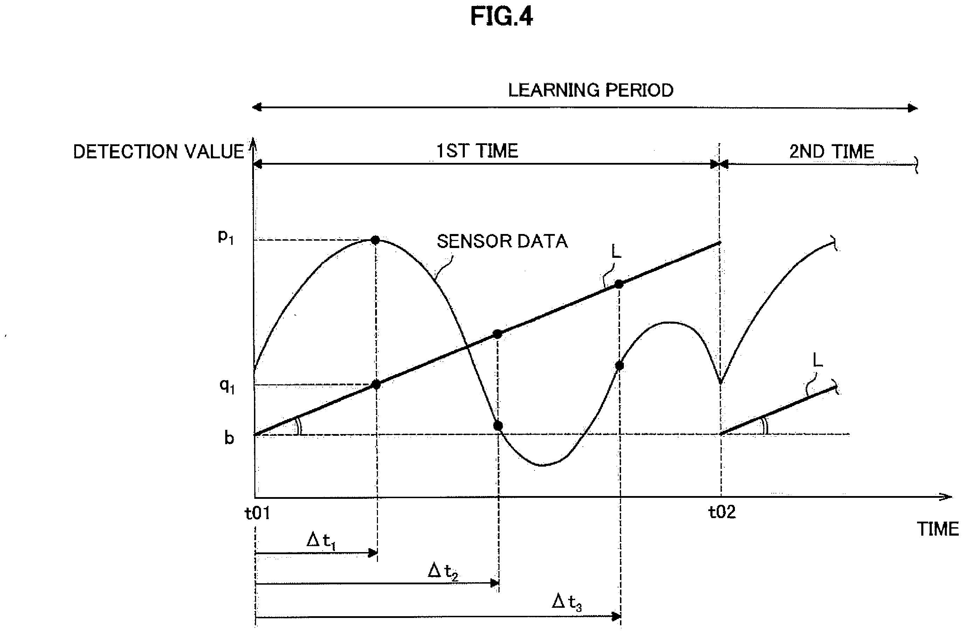

In the function storage means 15, linear functions (lines L illustrated in FIG. 4) which monotonously increase as time passes from the start times (times t01, t02, ... illustrated in FIG. 4) of the operation processes are stored. The linear function is used by the data mining means 14.

In the diagnostic result storage means 16, a diagnostic result of the data mining means 14 is stored. The diagnostic result includes identification information of the mechanical facility 2, and the presence or absence of an abnormality predictor.

The display control means 17 outputs to the display means 18 a control signal for displaying the diagnostic result of the data mining means 14. For instance, the display control means 17 displays a diagnostic result on the display means 18 in a matrix format with a row indicating the name of each a mechanical facility 2 and a column indicating the date of diagnosis.

The display means 18 is, for instance, a liquid crystal display, and displays a diagnostic result in accordance with the control signal inputted from the display control means 17.

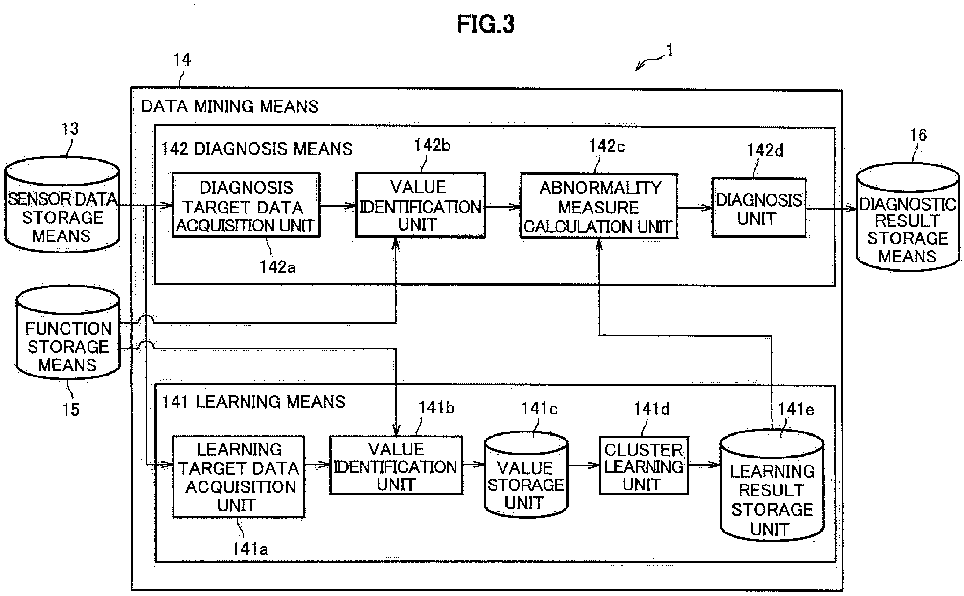

FIG. 3 is a configuration diagram of the data mining means 14 included in the abnormality predictor diagnosis system 1.

As illustrated in FIG. 3, the data mining means 14 includes a learning means 141 and a diagnosis means 142.

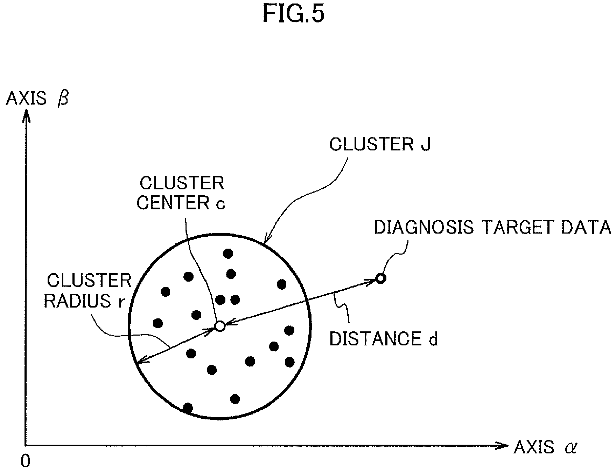

The learning means 141 learns a cluster (normal model) representing a normal waveform of detection values of a sensor by clustering that is one of the statistical data classification techniques. The cluster is an area identified by a cluster center c (see FIG. 5) and a cluster radius r (see FIG. 5) in a multi-dimensional vector space, and is learned based on the sensor data acquired in a predetermined learning period (see FIG. 2).

As illustrated in FIG. 3, the learning means 141 includes a learning target data acquisition unit 141a, a value identification unit 141b, a value storage unit 141c, a cluster learning unit 141d, and a learning result storage unit 141e.

The learning target data acquisition unit 141a acquires sensor data (that is, learning target data) which is a learning target from the sensor data storage means 13. Specifically, the learning target data acquisition unit 141a acquires sensor data for each operation process repeated in the mechanical facility 2, the sensor data being acquired in a predetermined learning period in which the mechanical facility 2 is known to be normal.

In the learning target data acquired by the learning target data acquisition unit 141a, the value identification unit 141b identifies the detection values of the sensor and the values of the linear function when the predetermined times $\Delta t_1, \Delta t_2, \Delta t_3$ (see FIG. 4) with different lengths have passed since the start of an operation process. The predetermined times $\Delta t_1, \Delta t_2, \Delta t_3$ are set beforehand so that an occurrence of an abnormality predictor of the mechanical facility 2 is sensitively reflected in the detection values of the sensor at the predetermined times $\Delta t_1, \Delta t_2, \Delta t_3$.

FIG. 4 is an explanatory diagram related to detection values of a sensor, and the line L expressed by a linear function.

As illustrated in FIG. 4, an operation process is repeated for the 1st time, the 2nd time,... in the mechanical facility 2, and accordingly, the detection value of the sensor varies. As described above, each line L illustrated in FIG. 4 is a linear function that monotonously increases as time passes from the start time (time t01, time t02, ...) of an operation process. The value identification unit 141b (see FIG. 3) identifies detection value $p_1$ (see FIG. 4) of the sensor and value $q_1$ (see FIG. 4) of the line L when the predetermined time $\Delta t_1$ has passed since the start of an operation process. Similarly, for other predetermined times $\Delta t_2, \Delta t_3$, the value identification unit 141b identifies each of the detection value of the sensor and the value of the linear function.

In the value storage unit 141c illustrated in FIG. 3, the detection values and values of the linear function identified by the value identification unit 141b are stored in association with the predetermined times $\Delta t_1, \Delta t_2, \Delta t_3$. It is to be noted that when an operation process is repeated n times in the learning period, $(3 \times n)$ sets of a detection value and a value of the linear function are stored in the value storage unit 141c.

The cluster learning unit 141d learns a cluster (normal model) indicating a normal waveform of detection values of the sensor, based on the information stored in the value storage unit 141c.

FIG. 5 is an explanatory diagram of a cluster J learned by the cluster learning unit 141d. It is to be noted that the horizontal axis $\alpha$ of FIG. 5 is an axis indicating a numerical value after normalization of the value of the linear function, and the vertical axis $\beta$ is an axis indicating a numerical value after normalization of the detection value of the sensor. The waveform of the sensor data for one-time operation process is expressed by the detection values of the sensor and the values of the linear function at the predetermined times $\Delta t_1$, $\Delta t_2$, $\Delta t_3$ (see FIG. 4). Specifically, the sensor data is represented by two-dimensional feature vectors having components obtained by performing normalization processing on the detection values of the sensor and the values of the linear function. Here, the "normalization processing" is processing that causes the detection values of the sensor and the values of the linear function to be dimensionless quantities allowing mutual comparison by dividing the values by representative values (such as an average value, a standard deviation).

Each of • symbols (n symbols are present) illustrated in FIG. 5 indicates the sensor data when the predetermined time $\Delta t_1$, the predetermined time $\Delta t_2$, the predetermined time $\Delta t_3$ (see FIG. 4) have passed since the start of an operation process. It is to be noted that although one cluster J is illustrated in FIG. 5, actually, at least three clusters are generated corresponding to the predetermined times $\Delta t_1$, $\Delta t_2$, $\Delta t_3$.

The cluster learning unit 141d (see FIG. 3) classifies n feature vectors indicated by • symbols into groups called clusters. Hereinafter, as an example, a case will be described where a cluster is learned by using k-means method which is non-hierarchical clustering. The cluster learning unit 141d first assigns a cluster to each feature vector at random, and calculates the center (the cluster center c, see FIG. 5) of each cluster based on the assigned data. The cluster center c is, for instance, the centroid of multiple feature vectors belonging to a cluster.

Subsequently, the cluster learning unit 141d determines the distance between a predetermined feature vector and each cluster center c, and reassigns the feature vector to a cluster with the shortest distance. The cluster learning unit 141d executes such processing on all feature vectors. When assignment of clusters is not changed, the cluster learning unit 141d completes cluster generation processing, or otherwise recalculates the cluster center c from a newly assigned cluster.

The cluster learning unit 141d then calculates the coordinate values of the cluster center c (see FIG. 5), and the cluster radius r (see FIG. 5) for each cluster. The cluster radius r is, for instance, the average value of the distances between the cluster center c and the feature vectors belonging to the cluster. The method of calculating the cluster radius r is not limited to this. For instance, a feature vector farthest from the cluster center c among the feature vectors belonging to the cluster is identified, and the distance between the feature vector and the cluster center c may be the cluster radius r. In this manner, the cluster learning unit 141d learns a cluster that represents a normal waveform of the sensor data.

In the learning result storage unit 141e illustrated in FIG. 3, the cluster information, which is the result of learning by the cluster learning unit 141d, is stored as a database. The cluster information includes the cluster center c, the cluster radius r, and identification information of the mechanical facility 2.

The diagnosis means 142 illustrated in FIG. 3 diagnoses the mechanical facility 2 for the presence of an abnormality predictor using the cluster learned by the learning means 141. The diagnosis means 142 includes a diagnosis target data acquisition unit 142a, a value identification unit 142b, an abnormality measure calculation unit 142c, and a diagnosis unit 142d.

The diagnosis target data acquisition unit 142a acquires the diagnosis target sensor data (that is, the diagnosis target data) from the sensor data storage means 13. That is, the diagnosis target data acquisition unit 142a acquires sensor data in the diagnosis period (see FIG. 2) after the learning period, for each operation process repeated in the mechanical facility 2.

In the diagnosis target data acquired by the diagnosis target data acquisition unit 142a, the value identification unit 142b identifies the detection values of the sensor and the values of the linear function when the predetermined times $\Delta t_1$, $\Delta t_2$, $\Delta t_3$ have passed since the start of an operation process. The above-mentioned predetermined times $\Delta t_1$, $\Delta t_2$, $\Delta t_3$ are approximately the same as the predetermined times $\Delta t_1$, $\Delta t_2$, $\Delta t_3$ used by the learning means 141. In addition, the linear function ($y = a\Delta t + b$) used by the diagnosis means 142 is also approximately the same as the linear function ($y = a\Delta t + b$) used by the learning means 141.

The abnormality measure calculation unit 142c calculates an abnormality measure u of the diagnosis target data based on each detection value of the sensor and each value of the linear function identified by the value identification unit 142b, and the cluster information (the cluster center c, the cluster radius r) stored in the learning result storage unit 141e. First, the abnormality measure calculation unit 142c performs normalization processing on the detection value and the value of the linear function identified by the value identification unit 142b to convert into a two-dimensional feature vector. The abnormality measure calculation unit 142c refers to the cluster information stored in the learning result storage unit 141e, and identifies a cluster, among the clusters, having a cluster center c closest to the diagnosis target data. The abnormality measure calculation unit 142c then calculates an abnormality measure u based on the following (Expression 1) using the distance d (see FIG. 5) from the cluster center c of the identified cluster to the diagnosis target data, and the cluster radius r (see FIG. 5).

$$u = d/r \ldots \text{(Expression 1)}$$

The diagnosis unit 142d diagnoses the mechanical facility 2 for the presence of an abnormality predictor based on the abnormality measure u calculated by the abnormality measure calculation unit 142c. As an example, when the abnormality measure $u \leq 1$, the diagnosis target data is present in the cluster (that is, within the normal range), and thus the diagnosis unit 142d diagnoses the mechanical facility 2 as "abnormality predictor is not present". On the other hand, when the abnormality measure u > 1, the diagnosis target data is present outside the cluster (that is, outside the normal range), and thus the diagnosis unit 142d diagnoses the mechanical facility 2 as "abnormality predictor is present". The diagnosis unit 142d stores a result of the diagnosis in the diagnostic result storage means 16 in association with the diagnosis target data.

For instance, when the number of pieces of diagnosis target data with an abnormality measure u exceeding a predetermined threshold value is greater than or equal to a predetermined number in the diagnosis period, the diagnosis unit 142d may diagnose the mechanical facility 2 as "abnormality predictor is present".

<Operation of Abnormality Predictor Diagnosis System>

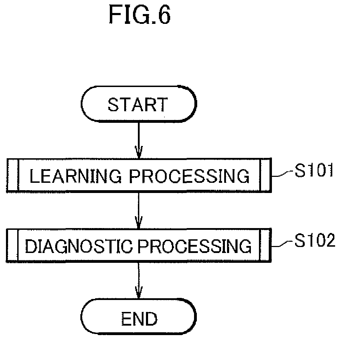

FIG. 6 is a flowchart illustrating the processing of the abnormality predictor diagnosis system 1. In step S101, the abnormality predictor diagnosis system 1 executes learning processing by the learning means 141 (see FIG. 3).

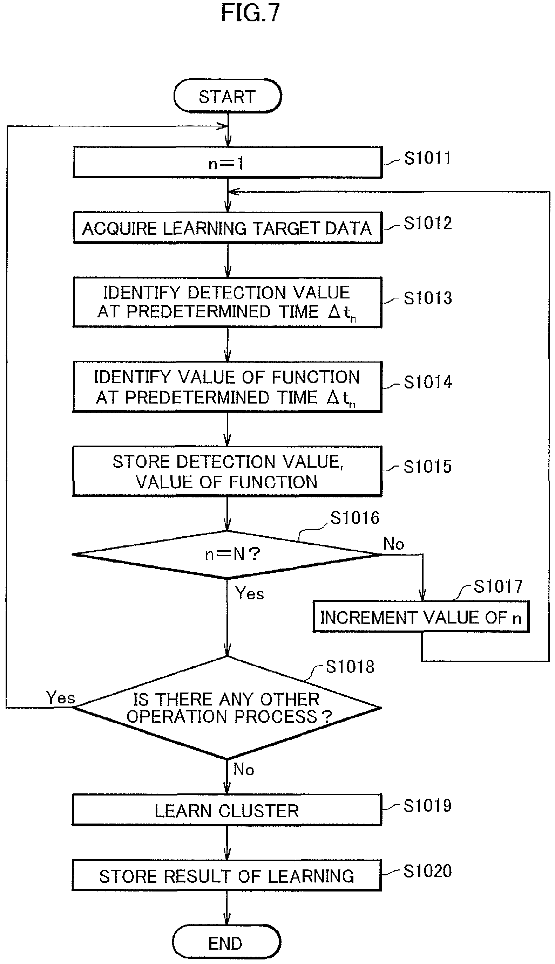

FIG. 7 is a flowchart of the learning processing executed by the learning means 141.

In step S1011, the learning means 141 sets value n to 1. The value n is a natural number that, when multiple predetermined times (3 predetermined times $\Delta t_1$, $\Delta t_2$, $\Delta t_3$ illustrated in FIG. 4) are present, is incremented (S1017) for selecting a predetermined time used for identifying the detection value of the sensor and the value of the linear function.

In step S1012, the learning means 141 acquires learning target data from the sensor data storage means 13 by the learning target data acquisition unit 141a. That is, the learning means 141 acquires sensor data in the 1st time operation process as the learning target out of the sensor data acquired in a learning period (see FIG. 2) in which the mechanical facility 2 is known to be in normal operation.

In step S1013, the learning means 141 identifies the detection value $p_1$ of the sensor when the predetermined time $\Delta t_1$ has passed since the start time (the time t01 illustrated in FIG. 4) of an operation process, by the value identification unit 141b. As described above, in addition to detection values of the sensor, the learning target data includes a signal indicating the start and end of an operation process. Therefore, the time t01 when the operation process is started can identified based on the signal.

In step S1014, the learning means 141 identifies the value $q_1$ of the linear function at the predetermined time $\Delta t_1$ by the value identification unit 141b (see FIG. 4). Specifically, the learning means 141 identifies value y (y = $q_1$ in FIG. 4) of the linear function by substituting the predetermined time $\Delta t_1$ into the linear function: y = $a\Delta t$ + b.

In step S1015, the learning means 141 stores the detection value $p_1$ identified in step S1013, and the value $q_1$ of the linear function identified in step S1014 in the value storage unit 141c in association with the predetermined time $\Delta t_1$.

In step S1016, the learning means 141 determines whether or not the value n has reached a predetermined value N. The predetermined value N is the number of predetermined times $\Delta t_n$ (in this embodiment, 3 predetermined times $\Delta t_1$, $\Delta t_2$, $\Delta t_3$) used for identifying the detection value of the sensor and the value of the linear function.

When the value n has not reached the predetermined value N (No in S1016), in step S1017, the learning means 141 increments the value of n, and returns to the processing in step S1012. The learning means 141 then identifies the detection values of the sensor and the values of the linear function similarly for other predetermined times $\Delta t_2$, $\Delta t_3$ (see FIG. 4).

On the other hand, when the value n has reached the predetermined value N in step S1016 (Yes in S1016), the processing of the learning means 141 proceeds to step S1018.

In step S1018, the learning means 141 determines whether or not there is another operation process, for which a detection value of the sensor and a value of the linear function have not been acquired, in the learning period (see FIG. 2).

When there is another operation process in step S1018 (Yes in S1018), the processing of the learning means 141 returns to step S1011. In other words, for another operation process, the learning means 141 identifies the detection values and the values of the linear function when the predetermined times $\Delta t_1$, $\Delta t_2$, $\Delta t_3$ have passed since the start of the operation process. For instance, since the 2nd time operation process is started from the time t02 illustrated in FIG. 4, the detection values of the sensor and the values of the linear function when the predetermined times $\Delta t_1$, $\Delta t_2$, $\Delta t_3$ have passed since the time t02 are identified.

On the other hand, where there is no other operation process, for which a detection value of the sensor and a value of the linear function have not been acquired in step S1018 (No in S1018), the processing of the learning means 141 proceeds to step S1019.

In step S1019, the learning means 141 learns a cluster based on the data stored in the value storage unit 141c. That is, as described above, the learning means 141 converts each detection value of the sensor and each value of the linear function into a two-dimensional feature vector, and learns a cluster (normal model) that represents a normal waveform of the detection value of the sensor by clustering each feature vector.

In step S1020, the learning means 141 stores the result learned in step S1019 in the learning result storage unit 141e, and completes a series of learning processing (END).

After the learning processing in step S101 illustrated in FIG. 6 is performed, in step S102, the abnormality predictor diagnosis system 1 executes diagnostic processing by the diagnosis means 142 (see FIG. 3).

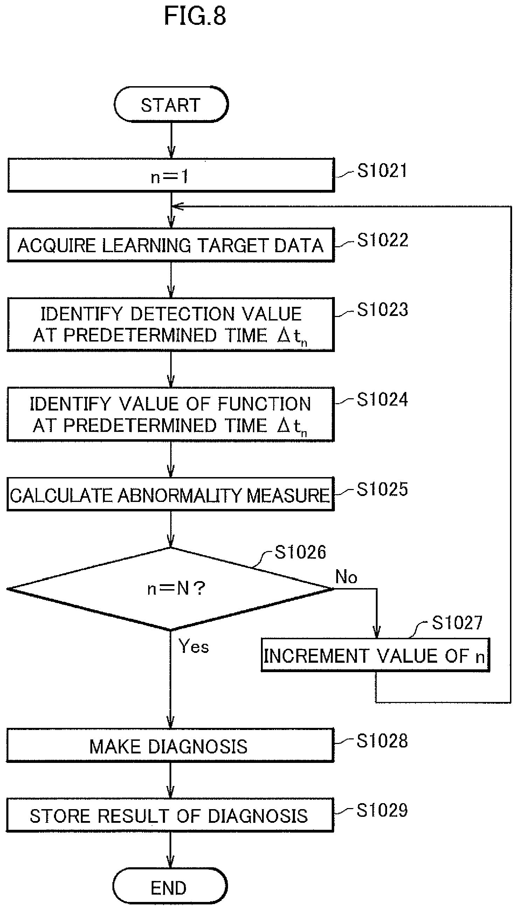

FIG. 8 is a flowchart of the diagnostic processing executed by the diagnosis means 142.

In step S1021, the diagnosis means 142 sets the value n to 1. The value n is the same as the value n described in step S1011 of FIG. 7.

In step S1022, the diagnosis means 142 acquires the diagnosis target data from the sensor data storage means 13 by the diagnosis target data acquisition unit 142a. That is, the diagnosis means 142 acquires the sensor data of the 1st time operation process as a diagnosis target out of the sensor data acquired in the diagnosis period (see FIG. 2) after the learning period.

In step S1023, the diagnosis means 142 identifies the detection value of the sensor when the predetermined time $\Delta t_1$ has passed since the start time of an operation process by the value identification unit 142b.

In step S1024, the diagnosis means 142 substitutes the predetermined time $\Delta t_1$ into the linear function by the value identification unit 142b to identify the value of the linear function.

In step S1025, the diagnosis means 142 calculates the abnormality measure u of the diagnosis target data by the abnormality measure calculation unit 142c. That is, in step S1025, the diagnosis means 142 normalizes the detection value identified in step S1023 and the value of the linear function identified in step S1024 to generate a two-dimensional feature vector having the normalized values as the components. The diagnosis means 142 then calculates the abnormality measure u of the diagnosis target data using the (Expression 1) based on the feature vector and the cluster information stored in the learning result storage unit 141e.

In step S1026, the diagnosis means 142 determines whether or not the value n has reached a predetermined value N. The predetermined value N is the number of predetermined times $\Delta t_n$ (3 in this embodiment), and is the same as the predetermined value N (see FIG. 7) used in the learning processing. When the value n has not reached the predetermined value N (No in S1026), in step S1027, the diagnosis means 142 increments the value of n, and returns to the processing in step S1022.

On the other hand, when the value n has reached the predetermined value N in step S1026 (Yes in S1026), the processing of the diagnosis means 142 proceeds to step S1028.

In step S1028, the diagnosis means 142 diagnoses the mechanical facility 2 for the presence of an abnormality predictor by the diagnosis unit 142d. Specifically, the diagnosis means 142 diagnoses the mechanical facility 2 for the presence of an abnormality predictor based on the abnormality measure u calculated in step S1025.

In step S1029, the diagnosis means 142 stores a diagnostic result in the diagnostic result storage means 16, and completes a series of diagnostic processing (END). The diagnosis means 142 repeats such diagnostic processing for each operation process included in the diagnosis period (see FIG. 2).

It is to be noted that the information stored in the diagnostic result storage means 16 is displayed on the display means 18 (see FIG. 1) by the display control means 17 (see FIG. 1).

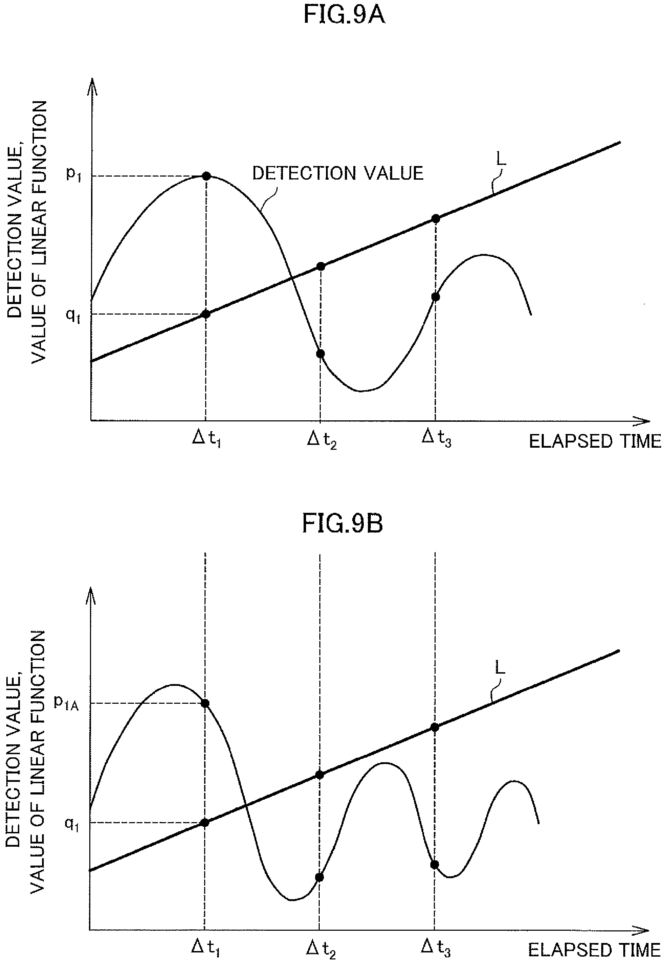

FIG. 9A is an explanatory diagram illustrating the waveform of learning target data, and line L of a linear function.

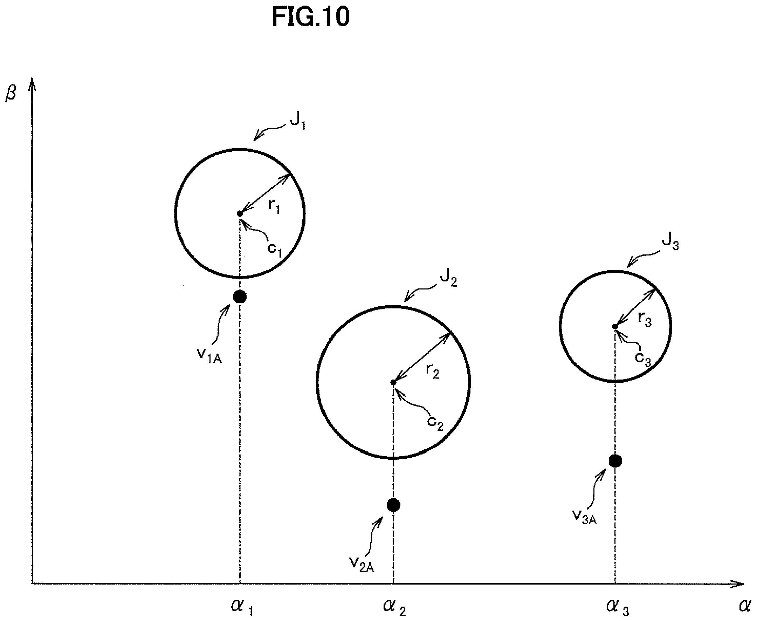

The waveform of the detection values illustrated in FIG. 9A is the learning target data (detection values) acquired in one-time operation process included in the learning period. As described above, a two-dimensional feature vector is generated, which has component values obtained by normalizing the detection value $p_1$ of the sensor and the value $q_1$ of the linear function (the line L) when the predetermined time $\Delta t_1$ has passed since the start of an operation process. Also, feature vectors are generated for other predetermined times $\Delta t_2$, $\Delta t_3$, and feature vectors are also generated for other operation processes included in the learning period. The clusters $J_1$, $J_2$, $J_3$ (see FIG. 10) described subsequently are learned based on those feature vectors.

FIG. 10 is an explanatory diagram of the clusters $J_1$, $J_2$, $J_3$ which are results of learning, and the feature vectors $v_{1A}$, $v_{2A}$, $v_{3A}$ of diagnosis target data. The horizontal axis $\alpha$ of FIG. 10 indicates a numerical value after normalization of the value of the linear function, and the vertical axis $\beta$ indicates a numerical value after normalization of the detection value of the sensor. The cluster $J_1$ illustrated in FIG. 10 is the cluster based on the detection value of the sensor and the value of the linear function when the predetermined time $\Delta t_1$ (see FIG. 9A) has passed since the start time of an operation process, and the cluster is represented by the cluster center $c_1$ and the cluster radius $r_1$. Similarly, the cluster $J_2$ is the cluster corresponding to the predetermined time $\Delta t_2$ (see FIG. 9A), and the cluster $J_3$ is the cluster corresponding to the predetermined time $\Delta t_3$ (see FIG. 9A). Incidentally, multiple clusters may be learned at a predetermined time $\Delta t_n$.

FIG. 9B is an explanatory diagram illustrating the waveform of diagnosis target data, and line L of a linear function at the time of occurrence of an abnormality predictor of the mechanical facility 2.

In the example illustrated in FIG. 9B, the maximum value and the minimum value of the detection value in one-time operation process are the same as in the learning target data (see FIG. 9A) when the mechanical facility 2 is in normal operation, however, the waveform is different from that in a normal time. In a conventional abnormality predictor diagnosis system, diagnosis is made for the presence of an abnormality predictor based on only the detection values of a sensor, and thus erroneous diagnosis may be made as "abnormality predictor is not present" based on the diagnosis target data illustrated in FIG. 9B.

In contrast, in this embodiment, the mechanical facility 2 is diagnosed for the presence of an abnormality predictor based on whether or not a feature vector is present in a cluster, the feature vector being identified by the detection values of the sensor and the values of the linear function when the predetermined times $\Delta t_1$, $\Delta t_2$, $\Delta t_3$ have passed since the start time of an operation process. For instance, a feature vector $v_{1A}$ indicated by • symbol of FIG. 10 is generated based on the detection value $p_{1A}$ and the value $q_1$ (value $\alpha_1$ after normalization, see FIG. 10) of the linear function at the predetermined time $\Delta t_1$ illustrated in FIG. 9B. The feature vector $v_{1A}$ is not included in the cluster $J_1$ closest to the feature vector $v_{1A}$, and thus diagnosed as "abnormality predictor is present" by the diagnosis unit 142d. The same goes for a feature vector $v_{2A}$ corresponding to the detection value and the like of the predetermined time $\Delta t_2$ (see FIG. 9B), and a feature vector $v_{3A}$ corresponding to the detection value and the like of the predetermined time $\Delta t_3$ (see FIG. 9B).

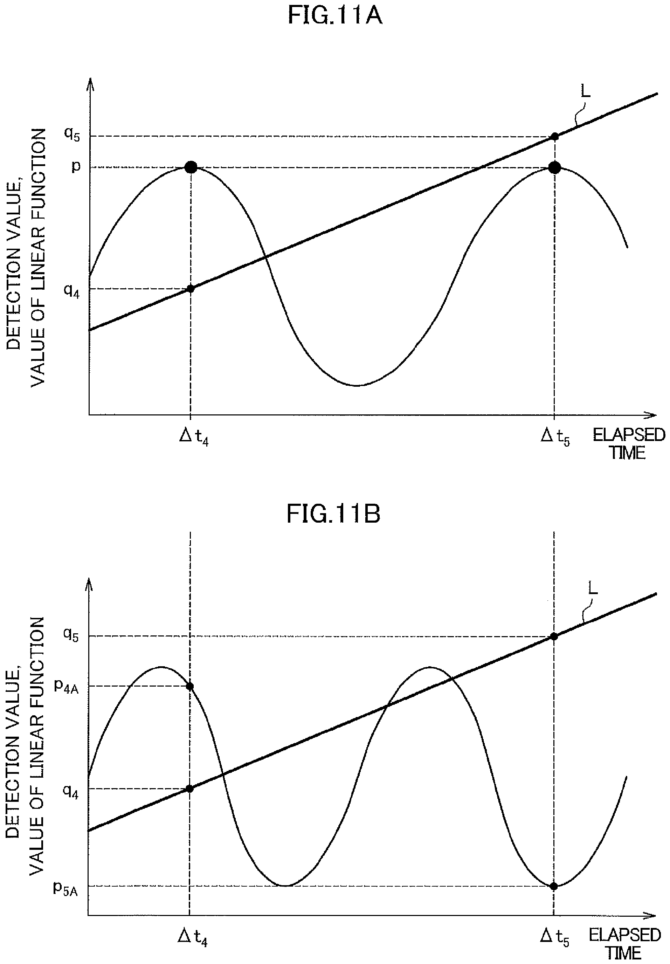

FIG. 11A is an explanatory diagram illustrating another example of the waveform of learning target data, and line L of a linear function.

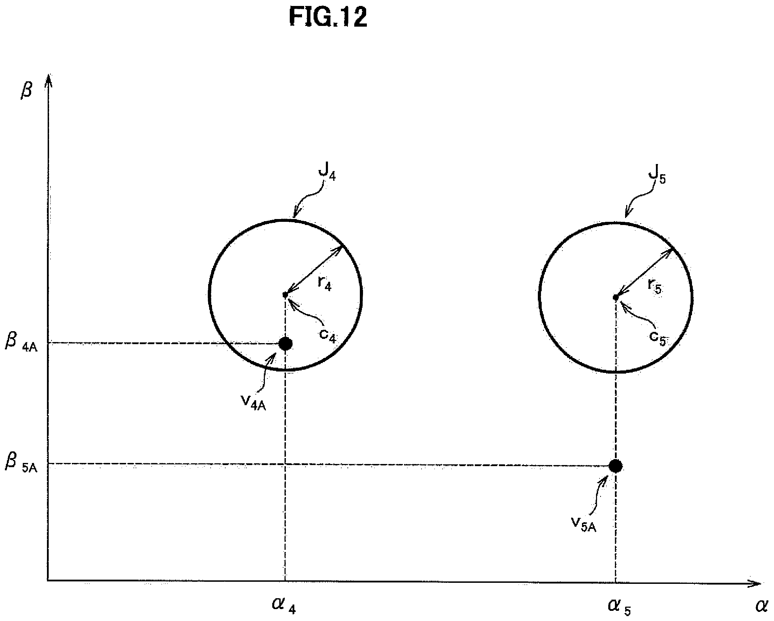

In the example illustrated in FIG. 11A, the detection value of a sensor varies in a sine wave form in the learning period in which the mechanical facility 2 is in normal operation. Also, two predetermined times $\Delta t_4$, $\Delta t_5$, which provide local maximum points of the waveform of detection values, are set. A cluster (normal model) that represents a normal waveform of the detection values is learned based on the detection values of the sensor and the values of the linear function when the predetermined times $\Delta t_4$, $\Delta t_5$ have passed since the start time of an operation process. As illustrated in FIG. 11A, the detection values p at the predetermined times $\Delta t_4$, $\Delta t_5$ are the same, however, the values $q_4$, $q_5$ of the linear function are significantly different ($q_4 < q_5$). As a result, different clusters $J_4$, $J_5$ (see FIG. 12) corresponding to the predetermined times $\Delta t_4$, $\Delta t_5$ are learned.

Incidentally, in a conventional technique that learns a cluster based on only the detection values of the sensor, the detection value p at the predetermined time $\Delta t_4$ and the detection value p at the predetermined time $\Delta t_5$ have not been distinguished in the learning processing. In contrast, in this embodiment, even when the same value p is detected, if the predetermined times $\Delta t_4$, $\Delta t_5$ are different, clusters can be learned in a distinguished manner. The learning result contributes to higher accuracy of abnormality predictor diagnosis as described later.

FIG. 11B is an explanatory diagram illustrating the waveform of diagnosis target data, and line L of a linear function at the time of occurrence of an abnormality predictor.

In the example illustrated in FIG. 11B, although the amplitude and the maximum value, the minimum value of the waveform of the diagnosis target data are the same as in a normal time, the period of the waveform is shorter than in a normal time. As a result, particularly the detection value $p_{5A}$ at the predetermined time $\Delta t_5$ is significantly smaller than the detection value p in a normal time.

FIG. 12 is an explanatory diagram of clusters $J_4$, $J_5$ which are results of learning, and feature vectors $v_{4A}$, $v_{5A}$ of diagnosis target data. It is to be noted that the horizontal axis $\alpha$ and the vertical axis $\beta$ are the same as in FIG. 10.

The cluster $J_4$ illustrated in FIG. 12 is the cluster that is learned by using the detection value of the sensor, and the value of the linear function when the predetermined time $\Delta t_4$ (see FIG. 11A) has passed since the start time of an operation process. The cluster $J_5$ is the cluster based on the detection value of the sensor, and the value of the linear function when the predetermined time $\Delta t_5$ (see FIG. 11A) has passed since the start time of an operation process.

As described above, the detection value $p_{5A}$ (see FIG. 11B, value $\beta_{5A}$ after normalization illustrated: see FIG. 12) at the predetermined time $\Delta t_5$ is significantly smaller than the detection value p in a normal time. Therefore, the feature vector $v_{5A}$ identified by the detection value and the value of the linear function at the predetermined time $\Delta t_5$ is located outside the cluster $J_5$ in the nearest neighbor. As a result, the feature vector $v_{5A}$ is diagnosed as "abnormality predictor is present" by the diagnosis unit 142d.

It is to be noted that since the values $q_4$, $q_5$ (see FIG. 11A) of the linear function at the predetermined times $\Delta t_4$, $\Delta t_5$ are different in magnitude, the clusters $J_4$, $J_5$ illustrated in FIG. 12 are relatively separated in $\alpha$ axis direction. Also, in the feature vector $v_{5A}$ (see FIG. 12) which is the diagnosis target data, value $\alpha_5$ in the $\alpha$ axis direction is approximately equal to $\alpha$ component of the cluster center cs. This is because even for the learning target data or the diagnosis target data, the same value $q_5$ of the linear function at the predetermined time $\Delta t_5$ is provided (see FIGs. 11A and 11B). As a result, the cluster with a cluster center closest to the feature vector $v_{5A}$ is the cluster $J_5$ and not the cluster $J_4$. Therefore, the abnormality measure u of the detection value $p_{5A}$ at the predetermined time $\Delta t_5$ can be calculated based on the cluster $J_5$ corresponding to the predetermined time $\Delta t_5$. Consequently, it is possible to diagnose whether or not the waveform of the detection values of the diagnosis target data is abnormal with high accuracy (in other words, the presence of an abnormality predictor of the mechanical facility 2).

<Effects>

According to this embodiment, the detection values and the values of the monotonously increasing linear function when the predetermined times $\Delta t_n$ has passed since the start time of an operation process are converted to a two-dimensional feature vector, and a normal waveform of the detection values of the sensor can be learned as a cluster based on the feature vector.

Also, for the diagnosis target data, a feature vector is similarly generated, and it is possible to diagnose whether or not the waveform is abnormal with high accuracy based on the cluster which is a result of the learning (in other words, whether or not an abnormality predictor has occurred in the mechanical facility 2).

<<Modifications>>

Although the abnormality predictor diagnosis system 1 according to the present invention has been described based on the embodiments above, the present invention is not limited to these embodiments, and various modifications may be made.

Although in the embodiment, a case has been described where two or three predetermined times $\Delta t_n$ (see FIGs. 9A and 9B, FIGs. 11A and 11B) are set in order to identify the detection value and the value of the linear function, the invention is not limited to this. Specifically, the number of predetermined times $\Delta t_n$ may be one, or may be four or greater.

Although in the embodiment, a case has been described where a linear function that monotonously increases as time passes is used, the invention is not limited to this. For instance, a linear function that monotonously decreases as time passes may be used, or a curved function that monotonously increases or monotonously decreases as time passes may be used. In more general, a predetermined function, which outputs a different value as time passes, may be used.

Although a case has been described where a two-dimensional feature vector based on a detection value of a sensor, and a value of a linear function is individually determined for each of the predetermined times $\Delta t_1$, $\Delta t_2$, $\Delta t_3$, the invention is not limited to this. Specifically, in the time-series waveform of sensor data which is a learning target, the waveform data including the detection values of the sensor and the values of the linear function at the predetermined times $\Delta t_1$, $\Delta t_2$, $\Delta t_3$ are converted to a 6-dimensional feature vector by the learning means 141, and a cluster may be learned based on the feature vector obtained for each operation process. In the time-series waveform of sensor data which is a diagnosis target, the waveform data including the detection values of the sensor and the values of the linear function at the predetermined times $\Delta t_1$, $\Delta t_2$, $\Delta t_3$ are obtained by the diagnosis means 142, and the mechanical facility 2 may be diagnosed for the presence of an abnormality predictor based on the comparison between the waveform data and a normal model. It is to be noted that the method and the like of calculating an abnormality measure u are the same as in the embodiment. Consequently, the waveform of the detection values of the sensor in one-time operation process can be expressed by a 6-dimensional feature vector, and thus an abnormality (in other words, an abnormality predictor in the mechanical facility 2) of the waveform can be diagnosed with high accuracy.

Although in the embodiment, a case has been described, where the mechanical facility 2 is diagnosed for the presence of an abnormality predictor based on the sensor data acquired from one sensor, the invention is not limited to this. Specifically, the mechanical facility 2 may be diagnosed for the presence of an abnormality predictor based on the sensor data acquired from multiple sensors. In this case, as described in the embodiment a multi-dimensional feature vector may be generated based on the detection values of the sensors and the values of the linear function when the predetermined times have passed since the start time of an operation process. It is to be noted that the dimension number of the feature vector is (the number of sensors) + 1. A user can recognize what type of abnormality has occurred at which position of the mechanical facility 2 by using multiple sensors in this manner.

Although in the embodiment, a case has been described where an operation process of the mechanical facility 2 is repeated without a break, the invention is not limited to this. That is, it is sufficient that the start and end of each operation process of the mechanical facility 2 be recognized, and an operation process may be performed with a predetermined break period.

Although in the embodiment, the configuration has been described, in which a learned cluster is subsequently held (stored), the invention is not limited to this. Specifically, sensor data which is diagnosed as "abnormality predictor is not present" by the diagnosis unit 142d may be added to the learning target data, and the cluster center c and the cluster radius r may be recalculated (in other words, a cluster is re-learned) based on the learning target data with the addition. A cluster is re-learned in this manner, and thus information on the normal state of the mechanical facility 2 is gradually increased, and the cluster center c and the cluster radius r can be updated to more appropriate values.

As described above, each time learning target data is added, the oldest data in the existing learning target data may be excluded from the learning target. Thus, even when the mechanical facility 2 changes over time according to seasonal change, the cluster can be updated to follow the change, and eventually, the diagnostic accuracy for an abnormality predictor can be increased.

It is to be noted that the present invention is not limited to the embodiments including all the components described in each embodiment. Also, part of the components of an embodiment may be replaced by a component of another embodiment, and a component of another embodiment may be added to the components of an embodiment. Also, another component may be added to, deleted from, or may replace part of the components of each embodiment.

Also, part or all of the components illustrated in FIG. 1, FIG. 3 may be implemented by hardware, for instance, by designing an integrated circuit. Each component described above may be implemented by software in which a processor interprets and executes a program that implements each function. Information, such as a program, a tape, a file, which implements each function may be stored in a recording device, such as a memory, a hard disk, an SSD (Solid State Drive) or a recording medium, such as an IC card, an SD card, a DVD. Also, a control line or an information line which is considered to be necessary for description is illustrated, and all the control lines or information lines are not necessarily illustrated for a product. It may be interpreted that almost all components are practically connected to each other.

**Reference Signs List**

| | |
|---|---|
| 1 | abnormality predictor diagnosis system |
| 2 | mechanical facility |
| 11 | communication means |
| 12 | sensor data acquisition means |
| 13 | sensor data storage means |
| 14 | data mining means |
| 15 | function storage means |
| 16 | diagnostic result storage means |
| 17 | display control means |
| 18 | display means |
| 141 | learning means |
| 141a | learning target data acquisition unit |
| 141b | value identification unit |
| 141c | value storage unit |
| 141d | cluster learning unit |
| 141e | learning result storage unit |
| 142 | diagnosis means |
| 142a | diagnosis target data acquisition unit |
| 142b | value identification unit |
| 142c | abnormality measure calculation unit |
| 142d | diagnosis unit |

**Claims**

1. An abnormality predictor diagnosis system comprising:

   a sensor data acquisition means (12) adapted to acquire sensor data including detection values of a sensor installed in a mechanical facility (2) in which a predetermined operation process is repeated;
   a learning means (141) adapted, for each repetition of the predetermined operation process, in a time-series waveform of the sensor data in a period in which the mechanical facility is known to be normal, to identify the detection values of the sensor when predetermined times have passed since start of the operation process, to identify values of a predetermined function when the predetermined times have passed since the start of the operation process using the predetermined function that outputs different values for respective times elapsed from the start of the operation process, and to learn a normal model of the waveform, the normal model including at least one cluster of feature vectors corresponding to one of the predetermined times, the feature vectors being identified by the detection values and the values of the function at the one of the predetermined times and
a diagnosis means (142) adapted, in a time-series waveform of sensor data as a diagnosis target, to diagnose the mechanical facility for presence of an abnormality predictor based on whether or not a feature vector is present in the at least one cluster of the normal model, the feature vector being identified by the detection values in the diagnostic target and the values of the function when the predetermined times have passed since the start of the operation process.

2. The abnormality predictor diagnosis system according to claim 1,
wherein the predetermined function is a function that monotonously increases or monotonously decreases.

3. The abnormality predictor diagnosis system according to claim 1,
wherein in a time-series waveform of sensor data as a learning target, the learning means (141) are adapted to learn the normal model based on the feature vectors in each of a plurality of predetermined times having different lengths from the start of the operation process, and in the time-series waveform of sensor data as the diagnosis target, the diagnosis means (142) are adapted to acquire the feature vectors in each of the plurality of predetermined times having different lengths from the start of the operation process, and to diagnose the mechanical facility for presence of an abnormality predictor based on comparison between the feature vectors and respective clusters of the normal model for each of the plurality of predetermined times.

4. The abnormality predictor diagnosis system according to claim 1, wherein the learning means (141) are adapted to learn at least one cluster, represented by a cluster center and a cluster radius, as the normal model by clustering the feature vectors having components which are obtained by performing normalization processing on the identified detection values and the values of the function for producing dimensionless quantities which allow mutual comparison, and
the diagnosis means (142) are adapted to perform normalization processing on the sensor data as the diagnosis target to convert to the feature vectors, to identify a cluster with the cluster center closest to the feature vector among the at least one cluster, calculates a ratio of a distance between the cluster center of the cluster and the feature vector to the cluster radius as an abnormality measure, and to diagnose the mechanical facility for presence of an abnormality predictor based on the abnormality measure.

5. The abnormality predictor diagnosis system according to claim 1, wherein the learning means (141) are adapted to add sensor data, which is diagnosed by the diagnosis means (142) as having no abnormality predictor, to the learning target, and to re-learn the normal model including the added sensor data.

6. A method of diagnosing a mechanical facility in which a predetermined operation process is repeated by using an abnormality predictor, the method comprising:

acquiring sensor data including detection values of a sensor installed in the mechanical facility; in a time-series waveform of the sensor data in a period in which the mechanical facility is known to be normal, for each repetition of the predetermined operation process, identifying the detection values of the sensor when predetermined times have passed since start of the operation process, identifying values of a predetermined function when the predetermined times have passed since the start of the operation process using the predetermined function that outputs different values for respective times elapsed from the start of the operation process, and learning a normal model of the waveform, the normal model including at least one cluster of feature vectors corresponding to one of the predetermined times, the feature vectors being identified by the detection values and the values of the function at the one of the predetermined times; and in a time-series waveform of sensor data as a diagnosis target, diagnosing the mechanical facility for presence of an abnormality predictor based on whether or not a feature vector is present in the at least one cluster of the normal model, the feature vector being identified by the detection values in the diagnostic target and the values of the function when the predetermined times have passed since the start of the operation process.

**Patentansprüche**

1. Anomalie-Prädiktor-Diagnosesystem, umfassend:

eine Sensordaten-Erfassungseinrichtung (12), die dazu ausgelegt ist, Sensordaten zu erfassen, die Detektionswerte eines Sensors enthalten, der in einer mechanischen Anlage (2) installiert ist, in der ein vorgegebener Operationsvorgang wiederholt wird;
eine Lerneinrichtung (141), die dazu ausgelegt ist, für jede Wiederholung des vorgegebenen Operationsvorgangs in einer Zeitreihenwellenform der Sensordaten in einem Zeitraum, in dem die mechanische Anlage bekannterweise im Normalzustand ist, die Detektionswerte des Sensors zu identifizieren, wenn vorgegebene Zeiten seit dem Beginn des Operationsvorgangs vergangen sind, Werte einer vorgegebenen Funktion zu identifizieren, wenn die vorgegebenen Zeiten seit dem Beginn des Operationsvorgangs vergangen sind, der die vorgegebene Funktion verwendet, die verschiedene Werte zu seit dem Beginn des Operationsvorgangs jeweils abgelaufenen Zeiten ausgibt, und ein normales Modell der Wellenform zu lernen, wobei das normale Modell mindestens ein Cluster von Merkmalsvektoren, die einer der vorgegebenen Zeiten entsprechen, enthält, wobei die Merkmalsvektoren durch die Detektionswerte und die Werte der Funktion zu der einen der vorgegebenen Zeiten identifiziert werden; und eine Diagnoseeinrichtung (142), die dazu ausgelegt ist, in einer Zeitreihenwellenform von Sensordaten als einem Diagnoseziel die mechanische Anlage auf das Vorhandensein eines Anomalie-Prädiktors darauf basierend zu diagnostizieren, ob ein Merkmalsvektor in dem mindestens einen Cluster des normalen Modells vorhanden ist oder nicht, wobei der Merkmalsvektor durch die Detektionswerte im Diagnoseziel und die Werte der Funktion, wenn die vorgegebenen Zeiten seit dem Beginn des Operationsvorgangs vergangen sind, identifiziert wird.

2. Anomalie-Prädiktor-Diagnosesystem nach Anspruch 1, wobei die vorgegebene Funktion eine Funktion ist, die monoton steigt oder monoton fällt.

3. Anomalie-Prädiktor-Diagnosesystem nach Anspruch 1, wobei die Lerneinrichtung (141) dazu ausgelegt ist, in einer Zeitreihenwellenform von Sensordaten als einem Lernziel das normale Modell auf der Grundlage der Merkmalsvektoren zu jeder von mehreren vorgegebenen Zeiten mit verschiedenen Dauern vom Beginn des Operationsvorgangs zu lernen, und die Diagnoseeinrichtung (142) dazu ausgelegt ist, in der Zeitreihenwellenform von Sensordaten als dem Diagnoseziel die Merkmalsvektoren zu jeder der mehreren vorgegebenen Zeiten mit verschiedenen Dauern vom Beginn des Operationsvorgangs zu erfassen und die mechanische Anlage auf das Vorhandensein eines Anomalie-Prädiktors auf der Grundlage eines Vergleichs zwischen den Merkmalsvektoren und jeweiligen Clustern des normalen Modells für jede der mehreren vorgegeben Zeiten zu diagnostizieren.

4. Anomalie-Prädiktor-Diagnosesystem nach Anspruch 1,
wobei die Lerneinrichtung (141) dazu ausgelegt ist, mindestens ein Cluster, repräsentiert von einem Cluster-Mittelpunkt und einem Cluster-Radius, als das normale Modell durch Clustern der Merkmalsvektoren mit Komponenten, die durch Ausführen von Normalisierungsverarbeitung an den identifizierten Detektionswerten und den Werten der Funktion erhalten werden, zum Erzeugen von dimensionslosen Größen, die gegenseitigen Vergleich ermöglichen, zu lernen, und
die Diagnoseeinrichtung (142) dazu ausgelegt ist, Normalisierungsverarbeitung an den Sensordaten als dem Diagnoseziel auszuführen, um die Merkmalsvektoren umzuwandeln, ein Cluster mit dem Clustermittelpunkt, der dem Merkmalsvektor am nächsten ist, aus dem mindestens einen Cluster zu identifizieren, ein Verhältnis eines Abstands zwischen dem Clustermittelpunkt des Clusters und dem Merkmalsvektor zum Cluster-Radius als ein Anomalie-Maß zu berechnen und die mechanische Anlage auf das Vorhandensein eines Anomalie-Prädiktors auf der Grundlage des Anomalie-Maßes zu diagnostizieren.

5. Anomalie-Prädiktor-Diagnosesystem nach Anspruch 1,
wobei die Lerneinrichtung (141) dazu ausgelegt ist, Sensordaten, die von der Diagnoseeinrichtung (142) als keinen Anomalie-Prädiktor aufweisend diagnostiziert worden sind, zum Lernziel hinzuzufügen und das normale Modell einschließlich der hinzugefügten Sensordaten erneut zu lernen.

6. Verfahren zum Diagnostizieren einer mechanischen Anlage, in der ein vorgegebener Operationsvorgang wiederholt wird, unter Verwendung eines Anomalie-Prädiktors, wobei das Verfahren umfasst:

Erfassen von Sensordaten, die Detektionswerte eines in der mechanischen Anlage installierten Sensors enthalten;
in einer Zeitreihenwellenform der Sensordaten in einem Zeitraum, in dem die mechanische Anlage bekannterweise im Normalbetrieb ist, für jede Wiederholung des vorgegebenen Operationsvorgangs, Identifizieren von Detektionswerten des Sensors, wenn vorgegebene Zeiten seit dem Beginn des Operationsvorgangs vergangen sind, Identifizieren von Werten einer vorgegebenen Funktion, wenn die vorgegebenen Zeiten seit dem Beginn des Operationsvorgangs vergangen sind, der die vorgegebene Funktion verwendet, die verschiedene Werte für seit dem Beginn des Operationsvorgangs jeweils abgelaufene Zeiten ausgibt, und Lernen eines normalen Modells der Wellenform, wobei das normale Modell mindestens ein Cluster von Merkmalsvektoren, die einer der vorgegebenen Zeiten entsprechen, enthält, wobei die Merkmalsvektoren durch die Detektionswerte und die Werte der Funktion zu der einen der vorgegebenen Zeiten identifiziert werden; und
in einer Zeitreihenwellenform von Sensordaten als einem Diagnoseziel, Diagnostizieren der mechanischen Anlage auf Vorhandensein eines Anomalie-Prädiktors basierend darauf, ob ein Merkmalsvektor in dem mindestens einen Cluster des normalen Modells vorhanden ist oder nicht, wobei der Merkmalsvektor durch die Detektionswerte im Diagnoseziel und die Werte der Funktion, wenn die vorgegebenen Zeiten seit dem Beginn des Operationsvorgangs vergangen sind, identifiziert wird.

## Revendications

1. Système de diagnostic de prédicteur d'anomalie comprenant :

un moyen (12) d'acquisition de données de capteur adapté à acquérir des données de capteur incluant des valeurs de détection d'un capteur installé dans une installation mécanique (2) dans laquelle un processus opérationnel prédéterminé est répété ;
un moyen (141) d'apprentissage adapté, pour chaque répétition du processus opérationnel prédéterminé, dans une forme d'onde chronologique des données de capteur dans une période dans laquelle l'installation mécanique est connue pour être normale, à identifier les valeurs de détection du capteur lorsque des temps prédéterminés sont passés depuis le début du processus opérationnel, à identifier des valeurs d'une fonction prédéterminée lorsque les temps prédéterminés sont passés depuis le début du processus opérationnel en utilisant la fonction prédéterminée qui délivre en sortie des valeurs différentes pour des temps respectifs écoulés depuis le début du processus opérationnel, et à apprendre un modèle normal de la forme d'onde, le modèle normal incluant au moins un groupe de vecteurs de caractéristique correspondant à un des temps prédéterminés, les vecteurs de caractéristique étant identifiés par les valeurs de détection et les valeurs de la fonction à celui des temps prédéterminés ; et
un moyen (142) de diagnostic adapté, dans une forme d'onde chronologique de données de capteur comme une cible de diagnostic, à diagnostiquer l'installation mécanique pour la présence d'un prédicteur d'anomalie sur la base qu'un vecteur de caractéristique est ou non présent dans l'au moins un groupe du modèle normal, le vecteur de caractéristique étant identifié par les valeurs de détection dans la cible de diagnostic et les valeurs de la fonction lorsque les temps prédéterminés sont passés depuis le début du processus opérationnel.

**2.** Système de diagnostic de prédicteur d'anomalie selon la revendication 1, dans lequel la fonction prédéterminée est une fonction qui augmente de manière monotone ou diminue de manière monotone.

**3.** Système de diagnostic de prédicteur d'anomalie selon la revendication 1, dans lequel, dans une forme d'onde chronologique de données de capteur comme une cible d'apprentissage, le moyen (141) d'apprentissage est adapté à apprendre le modèle normal sur la base des vecteurs de caractéristique dans chacun d'une pluralité de temps prédéterminés ayant différentes longueurs depuis le début du processus opérationnel, et
dans la forme d'onde chronologique de données de capteur comme la cible de diagnostic, le moyen (142) de diagnostic est adapté à acquérir les vecteurs de caractéristique dans chacun de la pluralité de temps prédéterminés ayant différentes longueurs depuis le début du processus opérationnel, et à diagnostiquer l'installation mécanique pour la présence d'un prédicteur d'anomalie sur la base d'une comparaison entre les vecteurs de caractéristique et des groupes respectifs du modèle normal pour chacun de la pluralité de temps prédéterminés.

**4.** Système de diagnostic de prédicteur d'anomalie selon la revendication 1, dans lequel le moyen (141) d'apprentissage est adapté à apprendre au moins un groupe, représenté par un centre de groupe et un rayon de groupe, comme le modèle normal en regroupant les vecteurs de caractéristique ayant des composantes qui sont obtenues en exécutant un traitement de normalisation sur les valeurs de détection identifiées et les valeurs de la fonction pour produire des quantités sans dimension qui permettent une comparaison mutuelle, et
le moyen (142) de diagnostic est adapté à exécuter le traitement de normalisation sur les données de capteur comme la cible de diagnostic pour convertir en les vecteurs de caractéristique, à identifier un groupe avec le centre de groupe le plus proche du vecteur de caractéristique parmi l'au moins un groupe, à calculer un rapport d'une distance entre le centre de groupe du groupe et le vecteur de caractéristique sur le rayon de groupe comme une mesure d'anomalie, et à diagnostiquer l'installation mécanique pour la présence d'un prédicteur d'anomalie sur la base de la mesure d'anomalie.

**5.** Système de diagnostic de prédicteur d'anomalie selon la revendication 1, dans lequel le moyen (141) d'apprentissage est adapté à ajouter des données de capteur, qui sont diagnostiquées par le moyen (142) de diagnostic comme n'ayant pas de prédicteur d'anomalie, à la cible d'apprentissage, et à réapprendre le modèle normal incluant les données de capteur ajoutées.

**6.** Procédé de diagnostic d'une installation mécanique dans laquelle un processus opérationnel prédéterminé est répété en utilisant un prédicteur d'anomalie, le procédé comprenant :

l'acquisition de données de capteur incluant des valeurs de détection d'un capteur installé dans l'installation mécanique ;
dans une forme d'onde chronologique des données de capteur dans une période dans laquelle l'installation mécanique est connue pour être normale, pour chaque répétition du processus opérationnel prédéterminé, l'identification des valeurs de détection du capteur lorsque des temps prédéterminés sont passés depuis le début du processus opérationnel, l'identification de valeurs d'une fonction prédéterminée lorsque les temps prédéterminés sont passés depuis le début du processus opérationnel en utilisant la fonction prédéterminée qui délivre en sortie des valeurs différentes pour des temps respectifs écoulés depuis le début du processus opérationnel, et l'apprentissage d'un modèle normal de la forme d'onde, le modèle normal incluant au moins un groupe de vecteurs de caractéristique correspondant à un des temps prédéterminés, les vecteurs de caractéristique étant identifiés par les valeurs de détection et les valeurs de la fonction à celui des temps prédéterminés ; et
dans une forme d'onde chronologique de données de capteur comme une cible de diagnostic, le diagnostic de l'installation mécanique pour la présence d'un prédicteur d'anomalie sur la base qu'un vecteur de caractéristique est ou non présent dans l'au moins un groupe du modèle normal, le vecteur de caractéristique étant identifié par les valeurs de détection dans la cible de diagnostic et les valeurs de la fonction lorsque les temps prédéterminés sont passés depuis le début du processus opérationnel.

# FIG.1

MACHINERY EQUIPMENT  2

MACHINERY EQUIPMENT  2

MACHINERY EQUIPMENT  2

N

1 ABNORMALITY PREDICTOR DIAGNOSISSY STEM

11 COMMUNICATION MEANS

12 SENSOR DATA ACQUISITION MEANS

13 SENSOR DATA STORAGE MEANS

14 DATA MINING MEANS

15 FUNCTION STORAGE MEANS

16 DIAGNOSTIC RESULT STORAGE MEANS

17 DISPLAY CONTROL MEANS

18 DISPLAY MEANS

# FIG.2

LEARNING PERIOD | DIAGNOSIS PERIOD

DETECTION VALUE

1ST TIME | 2ND TIME | nTH TIME

0

t01 | t02 | t03 | t11 | TIME

EP 3 333 661 B1

# FIG.3

EP 3 333 661 B1

**FIG.4**

LEARNING PERIOD

1ST TIME | 2ND TIME

DETECTION VALUE

SENSOR DATA

L

$p_1$

$q_1$

$b$

$t01$

$t02$

$\Delta t_1$

$\Delta t_2$

$\Delta t_3$

TIME

FIG.5

# FIG.6

```
        ┌─────────────┐
        │    START    │
        └──────┬──────┘
               │
               ▼
   ┌───────────────────────┐
   ║  LEARNING PROCESSING  ║──S101
   └───────────────────────┘
               │
               ▼
   ┌───────────────────────┐
   ║ DIAGNOSTIC PROCESSING ║──S102
   └───────────────────────┘
               │
               ▼
        ┌─────────────┐
        │     END     │
        └─────────────┘
```

# FIG.7

START

n=1 — S1011

ACQUIRE LEARNING TARGET DATA — S1012

IDENTIFY DETECTION VALUE
AT PREDETERMINED TIME $\Delta t_n$ — S1013

IDENTIFY VALUE OF FUNCTION
AT PREDETERMINED TIME $\Delta t_n$ — S1014

STORE DETECTION VALUE,
VALUE OF FUNCTION — S1015

S1016
n=N?   No

Yes   S1017
INCREMENT VALUE OF n

S1018
Yes   IS THERE ANY OTHER
OPERATION PROCESS?

No

LEARN CLUSTER — S1019

STORE RESULT OF LEARNING — S1020

END

# FIG.8

```
                    ┌──────────┐
                    │  START   │
                    └────┬─────┘
                         │
         ┌───────────────▼───────────────┐
         │            n＝1                │──── S1021
         └───────────────┬───────────────┘
                         │         ◄──────────────────┐
         ┌───────────────▼───────────────┐            │
         │   ACQUIRE LEARNING TARGET DATA │──── S1022  │
         └───────────────┬───────────────┘            │
                         │                             │
         ┌───────────────▼───────────────┐            │
         │    IDENTIFY DETECTION VALUE    │──── S1023  │
         │  AT PREDETERMINED TIME Δtₙ     │            │
         └───────────────┬───────────────┘            │
                         │                             │
         ┌───────────────▼───────────────┐            │
         │    IDENTIFY VALUE OF FUNCTION  │──── S1024  │
         │   AT PREDETERMINED TIME Δtₙ    │            │
         └───────────────┬───────────────┘            │
                         │                             │
         ┌───────────────▼───────────────┐            │
         │  CALCULATE ABNORMALITY MEASURE │──── S1025  │
         └───────────────┬───────────────┘            │
                         │                             │
                    ┌────▼────┐  S1026                 │
                  ╱           ╲         No     ┌────────────────────┐
                 ╱    n＝N ？   ╲──────────────►│ INCREMENT VALUE OF n│─ S1027
                 ╲             ╱               └────────────────────┘
                  ╲           ╱                         ▲
                    └────┬────┘                         │
                         │ Yes                          │
         ┌───────────────▼───────────────┐
         │         MAKE DIAGNOSIS         │──── S1028
         └───────────────┬───────────────┘
                         │
         ┌───────────────▼───────────────┐
         │    STORE RESULT OF DIAGNOSIS   │──── S1029
         └───────────────┬───────────────┘
                         │
                    ┌────▼─────┐
                    │   END    │
                    └──────────┘
```

# FIG.9A

# FIG.9B

# FIG.10

EP 3 333 661 B1

# FIG.11A

# FIG.11B

# FIG.12

EP 3 333 661 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5684941 B
- JP H6259678 B
- EP 2752722 A1